## Europäisches Patentamt

## European Patent Office

## Office européen des brevets

(19)

(11) Publication number: **0 010 972**

**B1**

(12)

# EUROPEAN PATENT SPECIFICATION

(45) Date of publication of patent specification: **24.11.82**

(21) Application number: **79302416.7**

(22) Date of filing: **02.11.79**

(51) Int. Cl.³: **A 01 N 25/04,**
**A 01 N 43/70** //(A01N43/70,
37/22)

(54) **Flowable herbicides containing propachlor and a process for their preparation.**

<table>
<tr><td>(30) Priority: <b>03.11.78 US 957125</b></td><td>(73) Proprietor: <b>MONSANTO COMPANY Patent Department 800 North Lindbergh Boulevard St. Louis, Missouri 63166 (US)</b></td></tr>
<tr><td>(43) Date of publication of application:<br><b>14.05.80 Bulletin 80/10</b></td><td rowspan="2">(72) Inventor: <b>Le Clair, Francis Joseph 4 North Iola Drive Webster Groves, Missouri 63119 (US)</b> Inventor: <b>Surgant, John Melvin 712 Wenneker Drive Clayton, Missouri 63124 (US)</b></td></tr>
<tr><td>(45) Publication of the grant of the patent:<br><b>24.11.82 Bulletin 82/47</b></td></tr>
<tr><td>(84) Designated Contracting States:<br><b>BE DE FR GB IT NL SE</b></td><td rowspan="2">(74) Representative: <b>Nash, Brian Walter et al, Monsanto House 10-18 Victoria Street London, SW1H 0NQ (GB)</b></td></tr>
<tr><td>(56) References cited:<br><b>FR - A - 2 206 049<br>FR - A - 2 329 203<br>US - A - 3 157 486</b></td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**0010972**

Flowable herbicides containing propachlor and a process for their preparation

The invention herein pertains to the field of flowable herbicides, materials and processes for preparation thereof. In particular, flowable herbicides comprising propachlor, and mixtures thereof with triazines, e.g., atrazine, and appropriate emulsifying/suspending agents, solvents and carriers are disclosed.

Description of the prior art

The prior art with respect to herbicides comprises wettable powders (WP's) emulsifiable concentrates (E.C.'s), granules and flowable formulations which may be prepared as package mixes or tank mixes.

As relevant to the present invention which pertains to flowable herbicides comprising propachlor alone or in combination with certain s-triazines, the prior art describes a variety of formulations in the above forms. For example, U.S. Re Patent No. 26,961 (original Patent No. 2,863,752) and U.S. Patents 3,442,945 and 3,547,620 describe various 2-haloacetanilides, e.g., propachlor, alachlor, butachlor, etc., which may be used alone or in admixture with herbicides including various triazines, including s-triazines. U.S. Patents 2,891,855 and 2,909,420 describe various triazines, e.g., atrazine, and Canadian Patent No. 847,250 refers to the combination of certain s-triazines with alachlor in various forms, e.g., solutions, emulsions, suspensions, or dusts. However, this patent does not give any details as to the materials (except active ingredients) or processes for producing any of these forms of formulations.

In addition to the above patent literature, there are commercial formulations of flowable propachlor and flowable atrazine which are applied as tank mixes.

The above prior art, the most relevant known to the inventors, is devoid of any disclosure or other description of a unitary flowable herbicide comprising propachlor and an s-triazine, e.g., atrazine. The commercial flowable propachlor and flowable atrazine mentioned above are each of proprietary composition, hence, unknown to the inventors. In addition, these flowable herbicides must be prepared separately, packaged separately, transported and stored in separate containers and used as a tank mix. As will be shown below, the flowable propachlor of this invention has superior properties as an independent flowable herbicide, i.e., having only one active ingredient, vis-a-vis said commercial flowable propachlor.

Problems associated with other prior art forms of acetanilide and/or s-triazine formulations include the need to convert wettable powder forms of these solid materials into slurries to be used by the farmer in preparing tank mixes for application to the soil. The preparation of slurries of wettable powders of some herbicides, e.g., of prominent note is propachlor, presents certain safety hazards and inconveniences due to the generation of noxious dusts which are irritable to the skin and hazardous to breathe. In addition, wettable powders of propachlor and atrazine when prepared as tank mixes do not disperse well, have poorer spontaneity of "bloom", have lower suspensibility, poor redispersibility and poorer compatibility with liquid fertilizers than do liquid formulations such as emulsifiable concentrates and flowable formulations.

Water-based flowable herbicides have advantages over emulsifiable concentrates since the latter generally required organic solvents which are usually flammable and/or of toxic composition, hazardous to the skin or from vapors evolved therefrom. Flowable herbicides do not suffer the usual disadvantages of wettable powders, dusts and emulsifiable concentrates mentioned above, are easier to prepare and use and have the same, and sometimes superior, herbicidal efficacy and crop safety as older forms of formulation mentioned above. Moreover, flowable herbicides generally, and in the present invention specifically, have superior properties with respect to suspensibility, viscosity, bloom redispersibility, stability (e.g., shelf-life and temperature cycling) and compatibility with liquid fertilizers.

It is a particular advantage of the present invention to provide a combination flowable herbicide comprising propachlor and an s-triazine herbicide e.g., flowable propachlor and atrazine, which may be prepared, transported, stored and used as a one-container herbicide having none of the disadvantages mentioned hereinabove.

As used herein and in the art a "flowable herbicide" denotes a suspension of solid particles in a liquid carrier.

A flowable herbicide of the present invention comprises propachlor herbicide, and is characterised by having the following composition by weight:

(a) from 25% to 50% of propachlor herbicide
(b) from 0 to 15% of an s-triazine herbicide selected from atrazine, simazine and propazine;
(c) an emulsifier/suspension system for components (a) and (b) comprising

| | |
|---|---|
| (i) hydrated amorphous silicon dioxide | 2—8% |
| (ii) polyoxypropylene/polyoxyethylene block copolymer | 2—8% |
| (iii) lower alkyl-substituted $C_{8-10}$ alkyne diol or ethoxylated ester thereof | 0—2% |

and

| | |
|---|---|
| (iv) hydrated aluminum silicate | 0.5—2% |

(d) an inert, low-freezing point solvent compatible with components (c) (i)—

| | |
|---|---|
| (iv); | 5—15% |
| (e) defoamer and | 0—0.1% |
| (f) an inert liquid carrier for components (a)—(e), | 30—70% |

the solid components of said composition having a particle size no greater than 25 microns.

In preferred embodiments of this invention, the flowable herbicide comprises propachlor, i.e., 2-chloro-N-isopropyl acetanilide, as the sole active ingredient, propachlor in combination with atrazine, i.e., 2-chloro-4-(ethylamino)-6-isopropylamino-s-triazine or a propachlor in combination with atrazine and additionally containing up to 5% of simazine i.e., 2-chloro-4,6-bis(ethylamino)-s-triazine, or propazine, i.e., 2-chloro-4,6-bis(isopropyl-amino)-s-triazine. When used alone, propachlor is present in a preferred concentration of from 35 to 48% by weight of the flowable herbicide, and in more preferred embodiments from 40 to 46%, whereas in combination with a said s-triazine herbicide or herbicides, the concentration of propachlor is reduced generally by the amount of added s-triazine. The latter preferably is present in an amount of from 5 to 15% and more preferably within the range 10—15%, the amount of active ingredients depending upon the particular weed spectrum to be treated.

The active ingredients in the flowable herbicides of this invention are maintained in a emulsification/suspension system comprising a unique and critical combination of (1) hydrated amorphous silicas exemplified by products similar to trade-named Hi-Sil, e.g., Hi-Sil 233 or Zeofree 80; (2) aqueous alcoholic solutions of polyoxypropylene/polyoxyethylene (P.O.P.-P.O.E.) block copolymers, trade-named Pluraflo, e.g., Pluraflo E4 and E5, having molecular weights on the order of 6500; (3) lower alkyl-substituted alkyne diols, (trade-name Surfynol) exemplified by dimethyl octynediol (Surfynol 82), tetramethyl decynediol (Surfynol 104) and the ethoxylated esters thereof, e.g. Surfynol 465 and Surfynol 485 (10 moles and 30 moles respectively of ethoxylated Surfynol 104) and (4) a hydrated aluminum silicate, such as kaolin and the like. An inert, low-freezing point solvent, e.g., polyglycols, which are compatible with said emulsification/suspension system and with water is also used. Preferably, a defoamer such as a 10% solution of Corak 100, a non-aqueous silicone antifoam compound having 100% silicone solids, is used, but is not critical and, finally, the balance of the flowable composition is made up with water.

A preferred emulsifier/suspension system comprises

| | |
|---|---|
| (i) hydrated amorphous silicon dioxide | 3—6% |
| (ii) polyoxypropylene/polyoxyethylene block copolymer | 3—6% |
| (iii) lower alkyl-substituted $C_{8-10}$ alkyne diol or ethoxylated ester thereof and | 0.1% |
| (iv) hydrated aluminum silicate | 0.8—1.5% |
| an inert, low freezing point alkane polyol solvent compatible with components (i)—(iv); | 7—10% |
| a defoamer, | 0—0.1% |
| and water | balance, |

percentages being relative to the total weight of the composition.

The solid components of the novel flowable herbicides of this invention have a particle size no greater than 25 microns. Preferably they have a particle size no greater than 20 microns, for example a particle size within the range 1.0 to 20 microns. The flowable herbicides of this invention can be prepared by a process which comprises adding components (a)—(f) to grinding means wherein said components are blended in a pre-grind operation prior to introduction into a wet grinding means to produce a solids particle size distribution as follows:

```
95% less than 48 microns
75% less than 35.5 microns
50% less than 23 microns
25% less than 13 microns
```

thereafter adding said pre-ground components (a)—(f) to said wet grinding means, and grinding said composition while maintaining the temperature of the system at 20°C. or below wherein said grinding is continued until the solid components of the composition have a particle size no greater than 25 microns.

Preferably the grinding is continued to give a particle size distribution as follows:

```
95% less than 20 microns
75% less than 10 microns
50% less than 5 microns
25% less than 2.5 microns
```

In preferred flowable herbicide embodiments the solids particle size distribution is as follows:

95% less than 4.5 microns
75% less than 2.8 microns
50% less than 2.4 microns
25% less than 1.9 microns

The final grinding operation may be conducted in vertical or horizontal media mills using stainless steel, ceramic or other ball grinding materials which are inert with respect to the reaction components.

Detailed description of the invention

Example 1

This example describes a preferred embodiment of the invention for preparing a flowable herbicide containing propachlor as the active ingredient.

The following components were fed to a mixer for a pre-grind mixing and blending operation in the indicated proportions:

| Component | Lb/Gal | (Kg/L) | 5 Gal | (L) | Percent by weight |
|---|---|---|---|---|---|
| Propachlor (95%) | 4.260 | (0.51) | 21.30 | (80.62) | 44.8 |
| Hi-Sil 233 | 0.380 | (0.05) | 1.90 | (7.19) | 4.0 |
| Kaolin (Barden Clay | 0.100 | (0.01) | 0.50 | (1.89) | 1.0 |
| Pluraflo 5E | 0.380 | (0.05) | 1.90 | (7.19) | 4.0 |
| Ethylene glycol | 0.748 | (0.09) | 3.74 | (14.16) | 8.0 |
| Corak 100 | 0.002 | (0.0002) | 0.01 | (0.04) | 0.02 |
| Water | 3.620 | (0.43) | 18.10 | (68.51) | 38.18 |
| | 9.500 | (1.14) | 47.45 | (179.60) | 100.00 |

The above formulation was ground in one gallon increments for 10 minutes for each gallon while maintaining the temperature at less than about 25°C, preferably about 20°C, until the solids were reduced to a particle size corresponding to the following distribution: 95% less than 48 microns; 75% less than 35.5 microns; 50% less than 23 microns and 25% less than 13 microns. The mixture is sampled for assay; any necessary adjustments are made based on the sample analysis.

The pre-ground mixture is them pumped to a surge tank, thence fed to a horizontal media mill, e.g. a Dyno-Mill, at a throughput volume of 7 liters/hour, while maintaining the temperature at about 18°—20°C. Solids in the formulation leaving the media mill has a particle size distribution as follows: 95% less than 4.5 microns; 75% less than 2.8 microns; 50% less than 2.4 microns and 25% less than 1.9 microns.

Example 2

Following the same procedures described in Example 1, but adding atrazine containing small amounts, e.g., from 0.5—5.0%, of atrazine-related compounds, i.e., homologs such as propazine and simazine, the following flowable formulation was prepared:

| Component | Lb/Gal | (Kg/L) | 5 Gal | (L) | Percent by weight |
|---|---|---|---|---|---|
| Propachlor (95%) | 3.20 | (0.38) | 16.00 | (60.56) | 33.605 |
| Atrazine (97%) | 1.06 | (0.13) | 5.30 | (20.06) | 11.195 |
| Hi-Sil 233 | .38 | (0.05) | 1.90 | (7.19) | 4.00 |
| Kaolin | .10 | (0.01) | 0.50 | (1.89) | 1.00 |
| Plurflo 5E | .38 | (0.05) | 1.90 | (7.19) | 4.00 |
| Ethylene glycol | .75 | (0.09) | 3.74 | (14.16) | 8.00 |
| Corak 100 | .002 | (0.0002) | 0.01 | (0.04) | 0.02 |
| Water | 3.620 | (0.43) | 18.10 | (68.51) | 38.18 |
| | 9.50 | (1.14) | 47.45 | (179.60) | 100.00 |

The solids particle sizing of this formulation has the same distribution as in Example 1.

Similar flowable formulations as the above having varying amounts of active ingredients have also been prepared in vertical media mills, called attritors. In any case, the essential criteria are that the process cooling temperatures be maintained at or below about 20°C, formulation assay be maintained at the correct composition and that the solids particle size be maintained below about 48—50 microns in the pre-mix and below 25 microns, preferably below 20 microns and still more preferably below 5 microns, i.e., according to the size distribution shown in Example 1.

Example 3

In order to illustrate the relative performance and superior physical properties of the flowable herbicides of this invention vis-a-vis the most closely-related herbicides of the prior art, tests were conducted to determine the relative "bloom" and redispersability of these formulations; the results of these tests are tabulated in Table 1 below.

The test procedures are as follows: a weighed amount of the herbicidal formulation (20 grams) is poured into a 250 ml glass stoppered graduate containing 230 cc of standard hard water through a 6 ml glass powder funnel. The degree of spontaneous emulsification ("bloom") is observed. The criteria for judging bloom is as follows: "Perfect"—a thick emulsion cloud descending to the bottom of the graduate without separation of any type; "Good"—thin bloom with no separation or thick bloom with minor separation such as "emulsion trailing" at 2″ or less from the bottom of the graduate and "Poor"—an emulsion cloud containing droplets breaking from the emulsion at the half-way point between the surface and bottom of the graduate; no oil droplets throughout bloom at 1″ from bottom of graduate.

The property of "redispersability" is determined by inverting the stoppered graduated cylinder until all separated material is resuspended; observations are made typically after 0.5, 1.0 and 24 hours. The number of inversions required for complete redispersion is a measure of the degree of redispersability of the herbicidal formulation. In Table 1, the numbers under the "Redispersability" column refer to the number of inversions required to effect resuspension of the respective herbicide formulations. The letter symbols under the "Formulation" column refer to formulations identified as follows:

A. Flowable propachlor according to this invention containing 4 lb/gal (0.48/kg/l) of propachlor;
B. Flowable propachlor commercially available under the trade name "Bexton 4L" also containing 4 lb/gal of propachlor.
C. Flowable propachlor/atrazine according to this invention containing 3.0 lb/gal (0.36 kg/l) propachlor and 1 lb/gal (0.120 kg/l) of atrazine and related atrazine compounds.
D. Bexton 4L flowable propachlor tank-mixed with flowable atrazine commercially available under trade name "Aatrex 4L" in proportions of 3:1 propachlor: atrazine [in lbs/gal (kg/l)].
E. Bexton 4L flowable propachlor tank-mixed with flowable atrazine commercially available under trade name "Co-Op 4L" in proportions of 3:1 propachlor: atrazine [in lbs/gal, (kg/l)].

### TABLE 1

| Formulation | Bloom | Redispersability | | |
|---|---|---|---|---|
| | | Property | | |
| | | 0.5 Hr. | 1.0 Hr. | 24 Hrs. |
| A | Perfect | 2 | 2 | 3 |
| B | Poor | 2 | 6 | 11 |
| C | Perfect | 1 | 2 | 2 |
| D | Good | 6 | 12 | 30 |
| E | Good | 5 | 10 | 30 |

Reference to the data in Table 1 demonstrates that Formulations A and C, i.e., flowable formulations according to this invention, are superior to analogous formulations of the prior art in the important properties of bloom and redispersability. The ability of a herbicide to readily redisperse after 24 hours is an important feature to a farmer who for one reason or another, e.g., rain, must delay applying a tank mix of the herbicide for a day or so.

It has been found that tested flowable herbicidal formulations of this invention display excellent suspensibility and redispersability in high salt solutions such as nitrogen or other fertilizer solutions when used as a tank mix. For example, Formulations A and C in Table 1 were found to be compatible in a fertilizer solution comprising ammonium nitrate (38.8%), urea (31.0%) and water (30.2%). On the other hand, these formulations, (as well as the other formulations in Table 1), displayed flocculation when tested in high-phosphorus fertilizer solutions having nitrogen: phosphorus: potassium ratios of 1:3:1.

The flowable herbicide formulations of this invention have particular utility in corn and sorghum in which the crop safety and herbicidal efficacy are equivalent to wettable powder tank mixes currently in use. In comprehensive field tests comparing preferred propachlor and propachlor/atrazine flowable formulations with wettable formulations it has been found that there are no significant differences in weed control, crop safety or yield between these herbicide formulations. Typical of such field tests are illustrated in the following examples.

Example 4

A flowable propachlor/atrazine formulation corresponding to that described in Example 2 and a comparable wettable powder (WP) propachlor/atrazine tank mix were tested in sorghum against redroot pigweed (RPW), puncture vine (PV), crabgrass (CG) and barnyardgrass (BYG). The respective herbicide formulations were applied pre-emergence at 3.32 lb/A (3.72 kg/Ha) for the flowable and 3.34 lb/A (3.81 kg/Ha) for the wettable powder on sandy loam soil. Observations were taken at 28 days and 58 days after treatment (DAT) and the following results noted (expressed in terms of percent injury to the indicated plants):

| Formulation | Percent injury | | | | | DAT |
|---|---|---|---|---|---|---|
| | Sorghum | RPW | PV | CG | BYG | |
| Flowably propachlor/atrazine | 4 | 78 | 62 | 92 | 92 | 28 |
| | 0 | 75 | 72 | 82 | 85 | 58 |
| WP propachlor/atrazine | 4 | 78 | 62 | 92 | 92 | 28 |
| | 0 | 80 | 83 | 80 | 83 | 58 |

Example 5

This example illustrates tests with flowable propachlor/atrazine according to Example 2 and a comparable tank mix of wettable powder propachlor/atrazine in corn against various grasses and lambsquarter (LBQ). The respective formulations were applied pre-emergence at 4.3 lb/A (4.82 kg/Ha) for the wettable powder and 4.0 lb/A (4.48 kg/Ha) for the flowable formulation. Observations were made 42 days after treatment with the following results:

| Formulation | Percent injury | | |
|---|---|---|---|
| | Corn | Grasses | LBQ |
| Flowable propachlor/atrazine | 0 | 41 | 65 |
| WP propachlor/atrazine | 0 | 60 | 86 |

Example 6

A flowable propachlor formulation corresponding to that described in Example 1 and a comparable wettable powder propachlor tank mix were tested in corn against redroot pigweed (RPW). lambsquarter (LBQ), blacknightshade (BNS) and green foxtail (GRFT). The respective herbicide formulations were applied at a rate of 4 lb/A (4.48 kg/Ha) of active ingredient by preplant incorporation into soil of loamy sand composition containing 1.2% organic matter. Observations were made 28 days after treatment. There was only a slight (3%) injury to the corn with both formulations and herbicidal efficacy compared as follows in terms of percent injury):

| | RPW | LBQ | BNS | GRFT |
|---|---|---|---|---|
| Wettable powder propachlor | 100 | 100 | 90 | 97 |
| Flowable propachlor | 100 | 74 | 84 | 57 |

Example 7

A flowable propachlor formulation corresponding to that described in Example 1 and a comparable wettable powder (WP) propachlor tank mix were tested in sorghum against red-root pigweed (RPW), green foxtail (GRFT), witchgrass (WTG) and barnyardgrass (BYG). The respective herbicide formulations were applied pre-emergence at 4.0 lb/A (4.48 kg/Ha) on silt loam soil having 1.5% organic matter. Observations were taken at 30 days and 78 days after treatment (DAT) and the following results noted, expressed in terms of percent injury to the indicated plants):

| Formulation | Percent injury | | | | | DAT |
|---|---|---|---|---|---|---|
| | Sorghum | RPW | GRFT | WTG | BYG | |
| Flowable propachlor | 0 | 33 | 93 | 85 | 93 | 30 |
| | 0 | 42 | 87 | — | 87 | 78 |
| WP propachlor | 0 | 23 | 85 | 83 | 92 | 30 |
| | 0 | 20 | 87 | — | 87 | 78 |

6

**0010972**

From the foregoing detailed description it will be apparent to those skilled in the art that the flowable herbicides disclosed and claimed herein provide the art with benefits and advantages not hitherto achieved. As indicated above the primary benefits of the flowable herbicides of this invention relate to the elimination of noxious fumes and dusts, improved bloom and redispersability, while maintaining crop safety and efficacy comparable to analogous herbicide formulations of the prior art. In addition, the flowable herbicides herein provide the convenience and economy of a one-container formulation; i.e., there is no necessity to buy, transport, store, measure and mix the components of two or more containers.

## Claims

1. A flowable herbicide comprising propachlor herbicide characterised by having the following composition by weight:

| | |
|---|---|
| (a) from 25% to 50% propachlor herbicide; | |
| (b) from 0 to 15% of an s-triazine herbicide selected from atrazine, simazine and propazine; | |
| (c) an emulsifier/suspension system for components (a) and (b) comprising | |
| (i) hydrated amorphous silicon dioxide | 2—8% |
| (ii) polyoxypropylene/polyoxyethylene block copolymer; | 2—8% |
| (iii) lower alkyl-substituted $C_{8-10}$ alkyne diol or ethoxylated ester thereof, | 0—2% |
| and | |
| (iv) hydrated aluminum silicate | 0.5—2% |
| (d) an inert, low-freezing point solvent compatible with components (c) (i)—(iv) | 5—15% |
| (e) defoamer | 0—0.1% |
| and | |
| (f) an inert liquid carrier for components (a)—(e), | 30—70% |

the solid components of said composition having a particle size no greater than 25 microns.

2. A flowable herbicide according to Claim 1 having the following composition by weight:

| | |
|---|---|
| (a) propachlor; | 35—48% |
| (b) an emulsifier/suspension system comprising | |
| (i) hydrated amorphous silicon dioxide | 3—6% |
| (ii) polyoxypropylene/polyoxyethylene block copolymer | 3—6% |
| (iii) lower alkyl-substituted $C_{8-10}$ alkyne diol or ethoxylated ester thereof | 0—1% |
| and | |
| (iv) hydrated aluminum silicate | 0.8—1.5% |
| (c) an inert, low freezing point polyol solvent compatible with components (b) (i)—(iv); | 7—10% |
| (d) a defoamer | 0—0.1% |
| and | |
| (e) water | balance, |

the solid components of said herbicide having a particle size no greater than 20 microns.

3. A flowable herbicide according to Claim 2 having the following composition by weight:

| | |
|---|---|
| (a) propachlor | 40—46% |
| (b) an emulsifier/suspension system comprising: | |
| (i) hydrated amorphous silicon dioxide | 4.0% |
| (ii) polyoxypropylene/polyoxyethylene block copolymer, mol. wt. 6500, in aqueous n-butanol | 4.0% |
| (iii) kaolin | 1.0% |
| (c) ethylene glycol | 8.0% |
| (d) silicone (10%) defoamer | 0.02% |
| and | |
| (e) water | balance, |

the solid components of said herbicide having a particle size within the range 1.0—20 microns.

4. A flowable herbicide according to Claim 1 wherein said s-triazine is atrazine.

5. A flowable herbicide according to Claim 4 additionally containing up to 5% of simazine or propazine.

7

6. A flowable herbicide according to Claim 5 having the following composition by weight:

| | |
|---|---|
| (a) propachlor | 25—40% |
| (b) atrazine and simazine or propazine | 5—15% |
| (c) an emulsifier/suspension system comprising | |
| (i) hydrated amorphous silicon dioxide | 3—6% |
| (ii) polyoxypropylene/polyoxyethylene block copolymer | 3—6% |
| (iii) lower alkyl-substituted $C_{8-10}$ alkyne diol or ethoxylated esters thereof | 0—1% |
| (iv) hydrated aluminum silicate | 0.8—1.5% |
| (d) an inert, low freezing point alkane polyol solvent compatible with components (c) (i)—(iv) | 7—10% |
| (e) a defoamer | 0—0.1% |
| and | |
| (f) water | balance |

the solid components of said herbicide having a particle size no greater than 20 microns.

7. A flowable propachlor/atrazine herbicide according to Claim 1 having the following composition by weight:

| | |
|---|---|
| (a) propachlor | 30—35% |
| (b) atrazine | 10—12% |
| (c) an emulsifier/suspension system comprising | |
| (i) hydrated amorphous silicon dioxide | 4.0% |
| (ii) polyoxypropylene/polyoxyethylene block copolymer mol. wt. 6500, in aqueous butanol | 4.0% |
| (iii) kaolin | 1.0% |
| (d) ethylene glycol | 8.0% |
| (e) silicone (10%) defoamer | 0.02% |
| and | |
| (f) water | balance |

the solid components of said herbicide having a particle size within the range 1.0—20 microns.

8. A flowable herbicide according to any of Claims 1—7 wherein said solid particle size corresponds to the following distribution:

95% less than 20 microns
75% less than 10 microns
50% less than 5 microns
25% less than 2.5 microns

9. A flowable herbicide according to any of Claims 1—7 wherein said particle size corresponds to the following distribution:

95% less than 4.5 microns
75% less than 2.8 microns
50% less than 2.4 microns
25% less than 1.9 microns

10. A process for preparing a flowable herbicide according to Claim 8, which process comprises adding the components to grinding means wherein said components are blended in a pre-grind operation to produce a solids particle size distribution as follows:

95% less than 48 microns
75% less than 35.5 microns
50% less than 23 microns
25% less than 13 microns

and thereafter grinding said pre-ground components in a wet grinding means while maintaining the temperature of the system at 20°C. or below until the solid components have the particle size distribution specified in Claim 8.

11. A process for preparing a flowable herbicide according to Claim 9 which process comprises adding the components to grinding means wherein said components are blended in a pre-grind operation to produce a solid particle size distribution as follows:

8

95% less than 48 microns
75% less than 35.5 microns
50% less than 23 microns
25% less than 13 microns

and thereafter grinding said pre-ground components in a wet grinding means while maintaining the temperature of the system at 20°C. or below until the solid components have the particle size distribution specified in Claim 9.

## Patentansprüche

1. Fließfähiges Herbizid enthaltend das Herbizid Propachlor, dadurch gekennzeichnet, daß es die folgende, auf das Gewicht bezogene Zusammensetzung besitzt:

(a) 25 bis 50% des Herbizids Propachlor;
(b) 0 bis 15% eines aus der Atrazin, Simazin und Propazin umfassenden Gruppe ausgewählten s-Triazin-Herbizids;
(c) ein Emulgator/Suspendiermittel-System für die Bestandteile (a) und (b) enthaltend
    (i) 2 bis 8% hydratisiertes, amorphes Siliciumdioxid,
    (ii) 2 bis 8% eines Polyoxypropylenen/Polyoxyäthylen-Blockcopolymers;
    (iii) 0 bis 2% eines Niedrigalkyl-substituierten $C_{8-10}$-Alkindiols oder eines äthoxylierten Esters davon; und
    (iv) 0,5 bis 2% hydratisiertes Aluminiumsilicat;
(d) 5 bis 15% eines mit den Bestandteilen (c) (i)—(iv) verträglichen inerten Lösungsmittels mit niedrigem Gefrierpunkt;
(e) 0 bis 0,1% eines Enschäumers; und
(f) 30 bis 70% eines inerten, flüssigen Trägers für die Bestandteile (a) bis (e),
wobei die festen Bestandteile der Zusammensetzung eine Teilchengröße von nicht mehr als 25 $\mu$m aufweisen.

2. Fließfähiges Herbizid nach Anspruch 1, dadurch gekennzeichnet, daß es die folgende, auf das Gewicht bezogene Zusammensetzung besitzt;

(a) 35 bis 38% Propachlor;
(b) ein Emulgator/Suspendiermittel-System enthaltend
    (i) 3 bis 6% hydratisiertes, amorphes Siliciumdioxid;
    (ii) 3 bis 6% eines Polyoxypropylen/Polyoxyäthylen-Blockcopolymers;
    (iii) 0 bis 1% eines Niedrigalkyl-substituierten $C_{8-10}$-Alkindiols oder eines äthoxylierten Esters davon; und
    (iv) 0,8 bis 1,5% hydratisiertes Aluminiumsilicat;
(c) 7 bis 10% eines mit den Bestandteilen (b) (i)—(iv) verträglichen inerten Polyollösungsmittels mit niedrigem Gefrierpunkt;
(d) 0 bis 0,1% eines Entschäumers; und
(e) Wasser als Rest,

wobei die festen Bestandteile des Herbizids eine Teilchengröbe von nicht mehr als 20 $\mu$m aufweisen.

3. Fließfähiges Herbizid Anspruch 1, dadurch gekennzeichnet, daß es die folgende, auf das Gewicht bezogene Zusammensetzung aufweist:

(a) 40 bis 46% Propachlor;
(b) ein Emulgator/Suspendiermittel-System enthaltend:
    (i) 4.0% hydratisiertes amorphes Siliciumdioxid;
    (ii) 4,0% eines Polyoxypropylen/Polyoxyäthylen-Blockcopolymers mit einem Molekulargewicht von 6500, in wäßrigem n-Butanol;
    (iii) 1,0% Kaolin;
(c) 8,0% Äthylenglykol;
(d) 0,02% eines Silicon-(10%)-Entschäumers; und
(e) Wasser als Rest,

wobei die festen Bestandteile des Herbizids eine Teilchengröße im Bereich von 1,0 bis 20 $\mu$m aufweisen.

4. Fließfähiges Herbizid nach Anspruch 1, dadurch gekennzeichnet, daß es als s-Triazin Atrazin enthält.

5. Fließfähiges Herbizid nach Anspruch 4, dadurch gekennzeichnet, daß es zusätzlich bis zu 5% Simazin oder Propazin enthält.

**0010972**

6. Fließfähiges Herbizid nach Anspruch 5, dadurch gekennzeichnet, daß es die folgende, auf das Gewicht bezogene Zusammensetzung aufweist:

(a) 25 bis 40% Propachlor;
(b) 5 bis 15% Atrazin und Simazin oder Propazin;
(c) ein Emulgator/Suspendiermittel-System, enthaltend
    (i) 3 bis 6% hydratisiertes amorphes Siliciumdioxid;
    (ii) 3 bis 6% eines Polyoxypropylen/Polyoxyäthylen-Blockcopolymers;
    (iii) 0 bis 1% eines Niedrigalkyl-substituierten $C_{8-10}$-Alkindiols oder eines äthoxylierten Esters davon;
    (iv) 0,8 bis 1,5% hydratisiertes Aluminiumsilicat;
(d) 7 bis 10% eines mit den Bestandteilen (c) (i)—(iv) verträglichen, inerten Alkanpolyollösungsmittels mit niedrigem Gefrierpunkt;
(e) 0 bis 0,1% eines Entschäumers; und
(f) Wasser als Rest;

wobei die festen Bestandteile des Herbizids eine Teichchengröße von nicht mehr als 20 $\mu$m aufweisen.

7. Fließfähiges Propachlor/Atrazin-Herbizid nach Anspruch 1, dadurch gekennzeichnet, daß es die folgende, auf das Gewicht bezogene Zusammensetzung aufweist:

(a) 30 bis 35% Propachlor;
(b) 10 bis 12% Atrazin;
(c) ein Emulgator/Suspendiermittel-System enthaltend
    (i) 4,0% hydratisiertes amorphes Siliciumdioxid;
    (ii) 4,0% eines Polyoxypropylen/Polyoxyäthylen-Blockcopolymers mit einem Molekulargewicht von 6500, in wäßrigem Butanol;
    (iii) 1,0% Kaolin;
(d) 8,0% Äthylenglykol;
(e) 0,02% eines Silicon-(10%)-Entschäumers; und
(f) Wasser als Rest;

wobei die festen Bestandteile des Herbizids eine Teilchengröße im Bereich von 1,0 bis 20 $\mu$m aufweisen.

8. Fließfähiges Herbizid nach einem der Ansprüche 1 bis 7, dadurch gekennzeichnet, daß die Feststoffteilchengröße der folgenden Verteilung entspricht:

    95% weniger als 20 $\mu$m,
    75% weniger als 10 $\mu$m,
    50% weniger als 5 $\mu$m, und
    25% weniger als 2,5 $\mu$m.

9. Fließfähiges Herbizid nach einem der Ansprüche 1 bis 7, dadurch gekennzeichnet, daß die Teilchengröße der folgenden Verteilung entspricht:

    95% weniger als 4,5 $\mu$m,
    75% weniger als 2,8 $\mu$m,
    50% weniger als 2,4 $\mu$m, und
    25% weniger als 1,9 $\mu$m.

10. Verfahren zur Herstellung des fließfähigen Herbizids nach Anspruch 8, dadurch gekennzeichnet, daß man die Bestandteile in eine Mahleinrichtung einführt, in der die Bestandteile vor dem Mahlvorgang in der Weise vermischt werden, daß sich die folgende Feststoffteilchenverteilung ergibt:

    95% weniger als 48 $\mu$m,
    75% weniger als 35,5 $\mu$m,
    50% weniger als 23 $\mu$m, und
    25% weniger als 13 $\mu$m,

und anschließend die vorvermahlenen Bestandteile in einer Naßmahleinrichtung unter Aufrechterhaltung einer Temperatur des Systems von 20°C oder darunter vermahlt, bis die festen Bestandteile die in Anspruch 8 angegebene Teilchengrößenverteilung aufweisen.

11. Verfahren zur Herstellung des fließfähigen Herbizids nach Anspruch 9, dadurch gekennzeichnet, daß man die Bestandteile in eine Mahleinrichtung einführt, in der die Bestandteile vor der Durchführung des Mahlvorgangs vermischt werden, bis sich die folgende Feststoffteilchenverteilung ergibt:

10

95% weniger als 48 $\mu$m,
75% weniger als 35,5 $\mu$m,
50% weniger als 23 $\mu$m, und
25% weniger als 13 $\mu$m,

und anschließend die vorvermahlenen Bestandteile in einer Naßmahleinrichtung under Beibehaltung einer Temperatur des Systems von 20°C oder weniger vermahlt, bis die festen Bestandteile die in Anspruch 9 angegebene Teilchengrößenverteilung aufweisen.

## Revendications

1. Herbicide pouvant s'écouler, comprenant l'herbicide dit propachlor, caractérisé en ce qu'il a la composition en poids suivante:

(a) 25 à 50% d'herbicide dit propachlor;
(b) O à 15% d'un herbicide à base de s-triazine choisi parmi l'atrazine, la simazine et la propazine;
(c) un système de produit d'émulsionnement/mise en suspension pour les composants (a) et (b) comprenant:

| | |
|---|---|
| 1) du bioxyde de silicium amorphe hydraté | 2—8% |
| 2) un copolymère séquencé polyoxypropylène/polyoxyéthylène | 2—8% |
| 3) un alcyne en($C_{8-10}$)diol à substitution alkylique inférieur ou son ester éthoxylé | 0—2% |

et

| | |
|---|---|
| 4) du silicate d'aluminium hydraté | 0,5—2% |

(d) un solvant inerte à faible point de congélation compatible avec les composants (c)—1) à 4) — 5—15%
e) un produit d'enlèvement de mousse — 0—0,1%
et
(f) un support liquide inerte pour les composants (a)—(e), — 30—70%

les composants solides de cette composition ayant une dimension de particule non supérieure à 25 microns.

2. Herbicide pouvant s'écouler selon la revendication 1, caractérisé en ce qu'il a la composition en poids suivante:

| | |
|---|---|
| (a) du propachlor | 35—48% |

(b) un système de produit d'émulsionnement/mise en suspension comprenant:

| | |
|---|---|
| 1) du bioxyde de silicium amorphe hydraté | 3—6% |
| 2) un copolymère séquencé polyoxypropylène/polyoxyéthylène | 3—6% |
| 3) un alcyne(en $C_{8-10}$)diol à substitution alkylique inférieure ou son ester éthoxylé | 0—1% |

et

| | |
|---|---|
| 4) du silicate d'aluminium hydraté | 0,8—1,5% |

(c) un solvant inerte formé de polyol à faible point de congélation compatible avec les composants (b) 1)—4) — 7—10%
(d) un produit de suppression de mousse — 0—0,1%
et
(e) de l'eau — complément

les composants solides de l'herbicide ayant une dimension de particule non supérieure à 20 microns.

3. Herbicide pouvant s'écouler selon la revendication 2, caractérisé en ce qu'il a la composition en poids suivante:

| | |
|---|---|
| (a) du propachlor | 40—46% |

(b) un système de produit d'émulsionnement/mise en suspension comprenant:

| | |
|---|---|
| 1) du bioxyde de silicium amorphe hydraté | 4,0% |
| 2) un copolymère séquencé polyoxypropylène/polyoxyéthylène à poids imoléculaire de 6500; dans une solution aqueuse de n-butanol | 4,0% |
| 3) du kaolin | 1,0% |
| (c) de l'éthylèneglycol | 8,0% |
| (d) un produit d'enlèvement de mousse à base de silicone (10%) | 0,02% |

et
(e) de l'eau — complément

**0010972**

les composants solides de l'herbicide ayant une dimension de particule dans la gamme 1,0—20 microns.

4. Herbicide pouvant s'écouler selon la revendication 1, caractérisé en ce que la s-triazine est l'atrazine.

5. Herbicide pouvant s'écouler selon la revendication 4, caractérisé en ce qu'il contient en outre jusqu'à 5% de simazine ou de propazine.

6. Herbicide pouvant s'écouler selon la revendication 5, caractérisé en ce qu'il a la composition en poids suivante;

| | |
|---|---|
| (a) du propachlor | 25—40% |
| (b) de l'atrazine et de la simazine ou de la propazine | 5—15% |
| (c) un système de produit d'émulsionnement/suspension comprenant | |
| 1) du bioxyde de silicium amorphe hydraté | 3—6% |
| 2) un copolymère séquencé polyoxypropylène/polyoxyéthylène | 3—6% |
| 3) un alcyne(en $C_{8-10}$)diol à substitution alkylique inférieure ou ses esters éthoxylés | 0—1% |
| 4) du silicate d'aluminium hydraté | 0,8—1,5% |
| (d) un solvant inerte, formé d'alcanepolyol à faible point de congélation compatible avec les composants (c) 1)—4) | 7—10% |
| (e) un produit de suppression de mousse et | 0—0,1% |
| (f) de l'eau | ·complément |

les composants solides de l'herbicide ayant une dimension de particule non supérieure à 20 microns.

7. Herbicide à base de propachlor/atrazine pouvant s'écouler selon la revendication 1, caractérisé en ce qu'il a la composition en poids suivante:

| | |
|---|---|
| (a) du propachlor | 30—35% |
| (b) de l'atrazine | 10—12% |
| (c) un système de produit d'émulsionnement/mise en suspension comprenant: | |
| 1) du bioxyde de silicium amorphe hydraté | 4,0% |
| 2) un copolymère séquencé polyoxypropylène/polyoxyéthylène à poids moléculaire de 6500, dans une solution aqueuse de butanol | 4,0% |
| 3) du kaolin | 1,0% |
| (d) de l'éthylèneglycol | 8,0% |
| (e) un produit de suppression de mousse à base de silicone (10%) et | 0,02% |
| (f) de l'eau | complément |

les composants solides de l'herbicide ayant une dimension de particule dans la gamme 1,0—20 microns.

8. Herbicide pouvant s'écouler selon l'une quelconque des revendications 1 à 7, caractérisé en ce que la dimension de particule des solides correspond à la distribution suivante:

95% de moins de 20 microns
75% de moins de 10 microns
50% de moins de 5 microns
25% de moins de 2,5 microns

9. Herbicide pouvant s'écouler selon l'une quelconque des revendications 1—7, caractérisé en ce que la dimension de particule correspond à la distribution suivante:

95% de moins de 4,5 microns
75% de moins de 2,8 microns
50% de moins de 2,4 microns
25% de moins de 1,9 micron

10. Procédé de préparation d'un herbicide pouvant s'écouler selon la revendication 8, caractérisé en ce qu'il consiste à ajouter des composants à des moyens de broyage où ces composants sont mélangés dans une opération de pré-broyage pour produire la distribution de dimension de particule de solides suivante:

95% de moins de 48 microns
75% de moins de 35,5 microns
50% de moins de 23 microns
25% de moins de 13 microns

12

**0010972**

en ensuite à broyer ces composants pré-broyés dans un moyen de broyage à l'état humide tout en maintenant la température du système à 20°C ou au-dessous jusqu'à ce que les composants solides aient la distribution de dimension de particule spécifiée dans la revendication 8.

11. Procédé de préparation d'un herbicide pouvant s'écoule selon la revendication 9, caractérisé en ce qu'il consiste à ajouter des composants à un moyen de broyage où les composants sont mélangés dans une opération de pré-broyage pour produire la distribution de dimension de particules de solides suivante:

95% de moins de 48 microns
75% de moins de 35,5 microns
50% de moins de 23 microns
25% de moins de 13 microns

et ensuite à broyer les composants pré-broyés dans un moyen de broyage à l'état humide tout en maintenant la température du système à 20°C ou au-dessous jusqu'à ce que les composants solides aient la distribution de dimension de particule spécifiée dans la revendication 9.

13